# EUROPÄISCHE PATENTANMELDUNG

(11) **EP 3 406 674 A1**
(43) Veröffentlichungstag der Anmeldung: **28.11.2018**
(21) Anmeldenummer: 17173073.2
(22) Anmeldetag: 26.05.2017
(51) Int. Cl.: C09D 5/33, B05D 5/06, C09D 5/26, C09K 9/00, C09K 9/02, E04B 1/76, F24J 2/40, G02F 1/01

(54) **THERMOCHROMES BESCHICHTUNGSSYSTEM**

(71) Anmelder: EWALD DÖRKEN AG, 58313 Herdecke (DE)
(72) Erfinder: Gartz, Elfriede, 44263 Dortmund (DE); Lavid, Rene, 58300 Wetter (DE); Mokains, Ilias, 58313 Herdecke (DE)
(74) Vertreter: Von Rohr Patentanwälte Partnerschaft mbB

(57) **Zusammenfassung**

Die vorliegende Erfindung betrifft ein thermochromes Beschichtungssystem zur Aufbringung auf ein Substrat, insbesondere zur flexiblen Steuerung der Absorption elektromagnetischer Strahlung durch ein Substrat, sowie ein Verfahren zur Herstellung des Beschichtungssystems und ein beschichtetes Substrat.

## Beschreibung

Die vorliegende Erfindung betrifft das technische Gebiet der thermochromen Beschichtungen, insbesondere die Verwendung thermochromer Beschichtungen zur Temperaturregulierung von Gebäuden, Ingenieursbauten, Silos, Containern, Fahrzeugen etc.

Insbesondere betrifft die vorliegende Erfindung ein thermochromes Beschichtungssystem zur Aufbringung auf ein Substrat sowie ein Verfahren zur Beschichtung eines Substrates mit einem thermochromen Beschichtungssystem.

Weiterhin betrifft die vorliegende Erfindung ein mit einem thermochromen Beschichtungssystem beschichtetes Substrat.

Es ist bekannt, dass durch Anbringung weißer Anstriche auf Gebäuden, insbesondere auf Dächern, die Hitzeentwicklung in Gebäuden minimiert werden kann. Insbesondere in Regionen mit hoher Sonneneinstrahlung sowie nur geringer Wärmedämmung der Gebäudehülle können somit die Kosten für den Betrieb von Klimaanlagen deutlich gesenkt werden.

Darüber hinaus wird die Dachkonstruktion erheblich geschont, da aufgrund der geringeren Temperaturentwicklung die Dachkonstruktion geringeren Temperaturschwankungen als bei Standarddächern ausgesetzt ist und folglich thermisch induzierte Verformungen und Längenänderungen der eingesetzten Materialien reduziert werden.

Insbesondere in den USA findet das unter dem Stichwort *"white roofing"* bekannte Konzept der Anbringung weißer Farbe auf den Dächern von Gebäuden immer stärkere Verbreitung, da gerade dort die Vorteile des *"white roofing"* besonders stark zum Tragen kommen: zum einen ist der Einsatz von Klimaanlagen sehr weit verbreitet und zum anderen sind Gebäudehüllen und insbesondere Dächer üblicherweise nur schlecht wärmeisoliert, so dass durch die Anbringung eines weißen bzw. farblosen Dachanstrichs sehr viel Energie eingespart werden kann.

In Europa und anderen gemäßigten Klimazonen hat sich das Konzept der Anbringung von temperaturregulierenden Beschichtungen auf Hausfassaden und Dächern bislang nicht durchgesetzt, da zum einen die Wärmedämmung der Gebäude oftmals gut ist, so dass Sonneneinstrahlung nicht zu vergleichbar hohen Temperaturanstiegen innerhalb des Gebäudes führt, und zum anderen die Verbreitung von Klimaanlagen deutlich geringer ist, so dass das Einsparpotential - sowohl an Energie als auch an Kosten - durch die Verwendung des *"white roofing"* nicht so hoch ist wie beispielsweise in den USA.

Darüber hinaus kommt erschwerend hinzu, dass durch das *"white roofing"* auch in den Wintermonaten die Wärmeaufnahme des Gebäudes durch Sonneneinstrahlung über insbesondere die Dachkonstruktion deutlich reduziert ist, wodurch die Heizkosten gegenüber einem konventionellen Dach deutlich erhöht sind.

Um diese bestehenden Probleme des *"white roofing",* nämlich die unerwünschte Reflektion von Sonnenenergie bei niedrigen Umgebungstemperaturen, zu lösen bzw. zu umgehen, wurden funktionale Beschichtungen auf Basis thermochromer Beschichtungen entwickelt. Thermochrome Beschichtungen sind üblicherweise unterhalb einer Schalttemperatur transparent und für elektromagnetische Strahlung durchlässig, so dass bei niedrigen Umgebungstemperaturen Sonnenstrahlung, insbesondere Infrarotstrahlung (IR-Strahlung), auf die Gebäudehülle trifft und das Gebäude erwärmen kann. Bei höheren Temperaturen, d. h. oberhalb der Schalttemperatur, reflektiert die thermochrome Beschichtung die elektromagnetische Strahlung, insbesondere IR-Strahlung, durch Lichtstreuung.

Üblicherweise wird die Lichtstreuung dadurch erreicht, dass die thermochrome Beschichtung mikroverkapselte ionische Flüssigkeiten enthält, welche unterhalb der Schalttemperatur eine homogene Phase bilden, so dass die Beschichtung für elektromagnetische Strahlung durchlässig ist, während oberhalb der Schalttemperatur eine Entmischung in den Mikrokapseln stattfindet und ein Zweiphasengemisch, nämlich eine Dispersion mit einer fein verteilten Phase - der sogenannten dispergierten Phase - resultiert, an welcher die einfallende elektromagnetische Strahlung gestreut wird.

So betrifft beispielsweise die US 9,222,015 B2 ein thermochromes Bedachungsmaterial, welches ein Substrat und eine darauf aufgebrachte thermochrome Beschichtung aufweist. Die thermochrome Beschichtung umfasst wiederum eine erste Schicht, welche eine thermochrome Verbindung und ein Polyharnstoffharz enthält, sowie eine zweite Beschichtung, welche ein Harz und einen UV-Blocker enthält, wobei die zweite Schicht auf der ersten Schicht aufgebracht ist. Bei Überschreitung einer Schalttemperatur bildet die thermochrome Beschichtung eine Dispersion aus, wobei die einfallende elektromagnetische Strahlung an der dispergierten Phase gestreut und so ein Teil der elektromagnetischen Strahlung reflektiert wird.

Weiterhin betrifft die DE 10 2012 215 459 A1 Baustoffe, insbesondere Anstrichfarben und Lacke, welche thermochrome Farbstoffe sowie Latentwärmespeicher aufweisen, um einen Temperaturregulierungseffekt innerhalb von Gebäuden zu erzeugen.

Darüber hinaus betrifft die DE 10 2011 002 686 U1 thermochrome Beschichtungen, welche von einem absorbierenden dunklen Zustand hin zu einem reflektierenden bzw. hellen Zustand übergehen können, um die Temperatur von Bauwerken zu regulieren.

Die zuvor vorgenannten thermochromen Beschichtungssysteme können zwar Verbesserungen im Hinblick auf die Reflektion elektromagnetischer Strahlung im Vergleich zu unbeschichteten Gebäudekonstruktionen, insbesondere Dächern, erzielen, reichen jedoch nicht an den Wirkungsgrad des klassischen *"white roofing"* heran, da durch die Lichtstreuung an der thermochromen Beschichtung die Strahlung nicht im gleichen Maße wie beim *"white roofing*"-Anstrich reflektiert wird.

Im Stand der Technik wurden daher auch andere Wege zur Temperaturregulierung innerhalb von Gebäuden durch thermochrome Beschichtungen beschritten, um diese Nachteile zumindest abzuschwächen.

So betrifft EP 1 224 543 B1 thermochrome Mehrschichtlaminate mit einer Basisschicht, welche im Wesentlichen elektromagnetische Strahlung reflektiert, und einer thermochromen Schicht, welche bei hohen Temperaturen durchlässig ist für elektromagnetische Strahlung und bei niedrigen Temperaturen die die auftreffende elektromagnetische Strahlung in Wärmeenergie umwandelt, die dann an die Gebäudekonstruktion abgegeben werden kann.

Das in EP 1 224 543 B1 beschriebene System ermöglicht zwar eine deutlich effizientere Anwendung thermochromer Beschichtungen als im Stand der Technik üblich, hat jedoch den Nachteil, dass das System in Form eines vorgefertigten Laminates vorliegt, welches auf eine Gebäudekonstruktion geklebt wird. Durch die Verwendung der insbesondere folienartigen Laminate kann nicht unter allen Anwendungsbedingungen verlässlich und reproduzierbar ein guter Verbund zwischen Untergrund und Laminat gewährleistet werden, so dass die Wärmeübertragung von dem Laminat auf die Gebäudehülle in der Praxis nicht dem theoretisch möglichen Wert entspricht.

Darüber hinaus ist gerade bei konstruktiv anspruchsvollen Dachgestaltungen die genaue Anpassung des Laminates an die Details der Dachkonstruktion schwierig bis unmöglich, so dass es auch hier erhebliche Performanceeinbußen, insbesondere im Hinblick auf die Wärmeaufnahme, im Vergleich zu den rein theoretisch möglichen Werten beobachtet werden.

Weiterhin ist an dem in der EP 1 224 543 B1 beschriebenen System problematisch, dass als reflektierende Schicht Aluminiumfolie verwendet wird, da die sehr dünnschichtigen Aluminiumfolien zum einen in der Praxis schnell reißen, wodurch die Reflektionsfähigkeit zumindest bereichsweise verloren geht, und zum anderen sehr kostenintensiv sind.

Es fehlt somit am Stand der Technik weiterhin an einem hochwirksamen Beschichtungssystem zur Temperaturkontrolle von Gebäuden. Insbesondere wäre ein Beschichtungssystem wünschenswert, welches bei hohen Umgebungstemperaturen elektromagnetische Strahlung reflektiert und somit einer Aufheizung des Gebäudes entgegenwirkt und bei niedrigen Temperaturen die auftreffende elektromagnetische Strahlen absorbiert und in Wärmeenergie umwandelt, so dass die Heizkosten effektiv gesenkt werden.

Insbesondere fehlt ein universell einsetzbares und leicht applizierbares System, welches unter einer Vielzahl von Anwendungsmöglichkeiten eine stets gleichmäßige und reproduzierbare Beschichtung von Gebäudehüllen und -dächern ermöglicht.

Die zuvor geschilderte Aufgabenstellung wird erfindungsgemäß gemäß einem ersten Aspekt der vorliegenden Erfindung durch ein Beschichtungssystem nach Anspruch 1 gelöst; weitere vorteilhafte Weiterbildungen und Ausgestaltungen des erfindungsgemäßen Beschichtungssystems sind Gegenstand der diesbezüglichen Unteransprüche.

Weiterer Gegenstand der vorliegenden Erfindung gemäß einem zweiten Aspekt der vorliegenden Erfindung ist die Verwendung eines Beschichtungssystems nach Anspruch 11.

Wiederum weiterer Gegenstand der vorliegenden Erfindung gemäß einem dritten Aspekt der vorliegenden Erfindung ist die Verwendung eines Beschichtungssystems nach Anspruch 12.

Darüber hinaus ist Gegenstand der vorliegenden Erfindung gemäß einem vierten Aspekt der vorliegenden Erfindung die Verwendung eines Beschichtungssystems nach Anspruch 13.

Weiterer Gegenstand der Erfindung gemäß einem fünften Aspekt der vorliegenden Erfindung ist ein Verfahren zur Beschichtung von Substraten nach Anspruch 14.

Schließlich ist weiterer Gegenstand der vorliegenden Erfindung gemäß einem sechsten Aspekt der vorliegenden Erfindung ein mit einem Beschichtungssystem beschichtetes Substrat nach Anspruch 15.

Es versteht sich von selbst, dass Besonderheiten, Merkmale, Ausgestaltungen und Ausführungsformen sowie Vorteile oder dergleichen, welche nachfolgend - zu Zwecken der Vermeidung von unnötigen Wiederholungen - nur zu einem Erfindungsaspekt ausgeführt werden, selbstverständlich in Bezug auf die übrigen Erfindungsaspekte entsprechend gelten, ohne dass es einer ausdrücklichen Erwähnung bedarf.

Weiterhin versteht es sich von selbst, dass bei der nachfolgenden Angabe von Werten, Zahlen und Bereichen die diesbezüglichen Werte-, Zahlen- und Bereichsangaben nicht beschränkend zu verstehen sind; es versteht sich für den Fachmann vielmehr von selbst, dass einzelfallbedingt oder anwendungsbezogen von den angegebenen Bereichen bzw. Angaben abgewichen werden kann, ohne dass der Rahmen der vorliegenden Erfindung verlassen ist.

Zudem gilt, dass alle im Folgenden genannten Werte- bzw. Parameterangaben oder dergleichen grundsätzlich mit genormten bzw. standardisierten oder explizit angegebenen Bestimmungsverfahren oder mit dem Fachmann auf diesem Gebiet an sich geläufigen Bestimmungsmethoden ermittelt bzw. bestimmt werden können.

Darüber hinaus versteht es sich von selbst, dass alle gewichts- oder mengenbezogenen Prozentangaben vom Fachmann derart ausgewählt werden, das in der Summe 100% resultieren; dies versteht sich jedoch von selbst.

Dies vorausgeschickt, wird im Folgenden die vorliegende Erfindung näher beschrieben.

Gegenstand der vorliegenden Erfindung gemäß einem **ersten** Aspekt der vorliegenden Erfindung ist somit ein thermochromes Beschichtungssystem zur Aufbringung auf ein Substrat, insbesondere zur flexiblen Steuerung der Absorption elektromagnetischer Strahlung eines Substrates, aufweisend
(a) eine erste, thermochrome Beschichtung und
(b) eine zweite, elektromagnetische Strahlung reflektierende Beschichtung,
wobei die erste Beschichtung und die zweite Beschichtung ausgehärtete Beschichtungsstoffe sind.

Denn, wie überraschenderweise herausgefunden wurde, lässt sich die Effizienz von thermochromen Beschichtungssystemen, welche eine thermochrome Beschichtung und eine elektromagnetische Strahlung reflektierende, insbesondere Infrarotstrahlung reflektierende, Beschichtung aufweisen, deutlich verbessern wenn sowohl die thermochrome Beschichtung als auch die elektromagnetische Strahlung reflektierende Beschichtung ausgehärtete Beschichtungsstoffe, insbesondere ausausgehärtete flüssige Beschichtungsstoffe, vorzugsweise ausgehärtete Lacke oder Farben, sind, d. h. als flüssige Lösung oder Dispersion bzw. in Form eines Pulverlacks auf ein Substrat aufgebracht und anschließend vernetzt werden. Durch die Aufbringung in Form von Beschichtungsstoffen, insbesondere flüssigen Beschichtungsstoffen, kann ein besonders inniger Verbund zwischen Substrat und Beschichtung(en) erreicht werden, insbesondere ist es möglich, dass die Beschichtung sämtliche Konturen des Substrates detailgetreu und in gleichbleibender Schichtdicke nachbildet und stets einen innigen und stabilen Verbund zu dem Substrat aufweist.

Unter einem Beschichtungsstoff ist im Rahmen der vorliegenden Erfindung insbesondere eine flüssige, pastenförmige oder pulverförmige Zusammensetzung zu verstehen, welche auf ein Substrat aufgetragen eine Oberflächenbeschichtung ergibt. Beschichtungsstoffe enthalten üblicherweise die folgenden Bestandteile: mindestens ein Filmbildner - auch Bindemittel genannt -, Pigmente, Füllstoffe, sowie Löse- oder Dispergiermittel und Additive.

Die Verwendung von Beschichtungen auf Basis von Beschichtungsstoffen hat im Vergleich zur Verwendung von mehrschichtigen Laminaten den Vorteil, dass stets eine gleichbleibend gute Verbindung mit dem Untergrund geschaffen wird, während bei der Verwendung von Laminaten durch Unebenheiten im Substrat die Konturen des Substrats durch das Laminat nicht richtig abgebildet werden können, so dass Stellen resultieren, an welchem das Laminat nicht fest mit dem Untergrund verbunden ist und folglich keine Wärmeübertragung möglich ist. Darüber hinaus besteht die Gefahr, dass sich derartige Fehlverklebungen durch Witterungseinflüsse vergrößern und die Haltbarkeit des Laminats stark eingeschränkt ist.

Weiterhin wird bei der Herstellung von Laminaten unweigerlich Luft zwischen den einzelnen Laminatschichten eingeschlossen, welche die durchgängige Haftung der Laminatschichten einander beeinträchtigen und auch die physikalische Eigenschaften des gesamten Laminates, insbesondere die Wärmeübertragung von einer Laminatschicht auf die andere, beeinflussen, insbesondere verschlechtern.

Das erfindungsgemäße thermochrome Beschichtungssystem erlaubt bei hohen Umgebungstemperaturen die Reflektion elektromagnetischer Strahlung, insbesondere von Strahlung im Infrarotbereich, d. h. mit Wellenlängen im Bereich von 780 nm bis 1 mm, welche zu einem hohen Maße absorbiert und in Wärmeenergie umgesetzt wird und somit zur Aufheizung von Gebäuden beiträgt.

Darüber hinaus ist bei niedrigen Umgebungstemperaturen die Wärmeübertragung zwischen den einzelnen Schichten des erfindungsgemäßen Beschichtungssystems und insbesondere zwischen dem Beschichtungssystem und dem beschichteten Substrat im Vergleich zu einem Laminat deutlich verbessert.

Weiterhin ermöglicht die Aufbringung des Beschichtungssystems als flüssiger Beschichtungsstoff, insbesondere als Lack oder Farbe, dass das erfindungsgemäße Beschichtungssystem auf sämtliche am Markt befindlichen Gebäudefassaden und Dachkonstruktionen, insbesondere auch auf Dachplanen und Dachpappe sowie sogar auf Kieselsteinen, mit welchen Flachdächer oftmals bedeckt sind, aufgebracht werden kann. Die Aufbringung bzw. der Auftrag kann dabei mittels üblicher Applikationsverfahren, wie beispielsweise durch Rakeln, Rollen, Pinseln, Walzen oder durch Sprühauftrag, erfolgen.

Darüber hinaus passt sich das erfindungsgemäße Beschichtungssystem durch den Auftrag in Form von Beschichtungsstoffen nicht nur in hervorragender Weise den Konturen der zu beschichtenden Oberfläche an, es entfallen darüber hinaus auch aufwendige Reinigungsarbeiten des zu beschichtenden Substrates, insbesondere der Häuserfassade oder der Dachkonstruktion, da Beschichtungsstoffe, insbesondere Lacke, besser an dem Substrat haften als beispielsweise Laminate, welche mittels Klebstoffen an den Oberflächen befestigt werden müssen.

Darüber hinaus kann insbesondere bei Verwendung chemisch ähnlicher Bindemittelsysteme für die thermochrome Beschichtung und die elektromagnetische Strahlung reflektierende Beschichtung des erfindungsgemäßen Beschichtungssystems eine deutliche Verbesserung der Temperaturtoleranz des Beschichtungssystems erzielt werden, da sich die Schichten unter Temperaturbelastung kongruent ausdehnen und auch wieder zusammenziehen. Bei unterschiedlichen Materialien mit unterschiedlichen Temperaturausdehnungskoeffizienten können durch Temperaturschwankungen hingegen Fehlstellen im Material auftreten, welche letztlich zur Delaminierung führen.

Das erfindungsgemäße thermochrome Beschichtungssystem eignet sich in hervorragender Weise zur Regulierung des Wärmehaushaltes von Substraten, insbesondere von Gebäudefassaden oder Dachkonstruktionen: Oberhalb einer bestimmten Temperatur, der sogenannten Schalttemperatur bzw. eines Temperaturbereiches, ist die thermochrome Beschichtung vorzugsweise durchlässig für elektromagnetische Strahlung, insbesondere IR-Strahlung, so dass die Strahlung auf die zweite, elektromagnetische, insbesondere IR-Strahlung, reflektierende Beschichtung trifft und wieder in die Atmosphäre reflektiert wird, ohne das Substrat maßgeblich zu erwärmen. Auf diese Weise wird bei hohen Umgebungstemperaturen eine zusätzliche Erwärmung insbesondere von Gebäuden durch Sonneneinstrahlung weitgehend vermieden, wodurch einerseits die Kosten für die Klimatisierung entscheidend gesenkt werden können und andererseits das Wohnklima deutlich verbessert werden kann.

Unterhalb der Schalttemperatur oder eines Temperaturbereiches, in welchem sich die Eigenschaften der thermochromen Beschichtung ändern, ist die thermochrome Beschichtung für elektromagnetische Strahlung, insbesondere IR-Strahlung, nicht durchlässig, sondern absorbiert diese, wodurch Strahlungsenergie in Wärmeenergie umgewandelt wird, welche dann wiederum über die zweite, elektromagnetische Strahlung reflektierende Beschichtung an das Substrat abgegeben wird. Hierdurch wird das Substrat erwärmt und insbesondere im Winter sind die Heizkosten von Gebäuden gegenüber Gebäuden mit konventioneller Dacheindeckung nicht erhöht.

Die erhöhten Heizkosten sind ein unerwünschter Nebeneffekt des *white roofings*, da auch bei niedrigen Umgebungstemperaturen stets ein beträchtlicher Anteil der auf das Dach treffenden Infrarotstrahlung reflektiert wird.

Im Rahmen der vorliegenden Erfindung ist es üblicherweise vorgesehen, dass die zweite Beschichtung zwischen der ersten Beschichtung und dem Substrat angeordnet ist. Auf diese Weise ist gewährleistet, dass die zweite, elektromagnetische Strahlung reflektierende Beschichtung nur dann elektromagnetische Strahlung, insbesondere IR-Strahlung, reflektiert, wenn die thermochrome Beschichtung für elektromagnetische Strahlung, insbesondere IR-Strahlung, durchlässig ist.

Unter einer thermochromen Beschichtung ist dabei im Rahmen der vorliegenden Erfindung eine Beschichtung zu verstehen, deren physikalische Eigenschaften, insbesondere optische Eigenschaften, sich in Abhängigkeit von der Temperatur ändern. Insbesondere ändern sich die optischen Eigenschaften der thermochromen Beschichtung oberhalb einer bestimmten Temperatur, der sogenannten Schalttemperatur, oder oberhalb eines definierten Temperaturintervalls vorzugsweise dahingehend, dass die thermochrome Beschichtung für elektromagnetische Strahlung, insbesondere Infrarotstrahlung, transparent, d. h. durchlässig, wird. Unterhalb der Schalttemperatur oder eines bestimmten Temperaturintervalls absorbiert die thermochrome Beschichtung elektromagnetische Strahlung, insbesondere Infrarotstrahlung, und wandelt die aufgenommene Strahlungsenergie vorzugsweise in Wärmeenergie um. Durch die Absorption von elektromagnetischer Strahlung kann es sein, dass die thermochrome Beschichtung unterhalb der Schalttemperatur dunkel, farbig oder trüb bzw. undurchsichtig ist.

Im Rahmen der vorliegenden Erfindung ist darüber hinaus üblicherweise vorgesehen, dass die erste Beschichtung die zweite Beschichtung kontaktiert, insbesondere unmittelbar kontaktiert. Im Rahmen der vorliegenden Erfindung ist es somit vorzugsweise vorgesehen, dass die erste, thermochrome Beschichtung die zweite, elektromagnetische Strahlung reflektierende Beschichtung unmittelbar kontaktiert, wodurch z. B. eine unerwünschte Absorption elektromagnetischer Strahlung durch Zwischenschichten vermieden wird.

Zwischen den einzelnen Schichten des erfindungsgemäßen Beschichtungssystems besteht üblicherweise keine chemische Bindung, das heißt es findet keine Vernetzung zwischen den Schichten statt, sondern - falls überhaupt - lediglich innerhalb der einzelnen Schichten des erfindungsgemäßen Beschichtungssystems. Die Haftung zwischen den einzelnen Schichten wird üblicherweise - ohne sich auf diese Theorie festlegen zu wollen - durch Dipol-Dipol-Wechselwirkungen oder Van-der-Waals-Wechselwirkungen erzeugt, wobei aufgrund des geringen Flächengewichts der Beschichtungen und der großen Kontaktfläche insgesamt eine äußerst beständige Verbindung zwischen den einzelnen Schichten des Beschichtungssystems erreicht wird.

Im Rahmen der vorliegenden Erfindung kann es jedoch gemäß einer alternativen Ausführungsform vorgesehen sein, dass zwischen der ersten, thermochromen Beschichtung und der zweiten, elektromagnetische Strahlung reflektierenden Beschichtung eine weitere Schicht, insbesondere eine Zwischenschicht, angeordnet ist, welche beispielsweise die Wärmeleitung aus der ersten, thermochromen Beschichtung auf die zweite, elektromagnetische Strahlung reflektierende Beschichtung verbessert.

Weiterhin ist es im Rahmen der vorliegenden Erfindung üblicherweise vorgesehen, dass die zweite Beschichtung Infrarotstrahlung reflektiert. Insbesondere Infrarotstrahlung wird von Gegenständen, wie beispielsweise Dächern oder Gebäudefassaden, in hohem Maße absorbiert und führt somit zu einer starken Erwärmung der Gebäude. Aus diesem Grund ist es vorteilhaft, wenn bei hohen Umgebungstemperaturen speziell Infrarotstrahlung reflektiert wird.

In diesem Zusammenhang hat es sich als vorteilhaft erwiesen, wenn die zweite Beschichtung mindestens 10%, insbesondere mindestens 30 %, vorzugsweise mindestens 60 %, bevorzugt mindestens 80 %, besonders bevorzugt mindestens 90 %, der auftreffenden elektromagnetischen Strahlung, insbesondere Infrarotstrahlung, reflektiert.

Weiterhin kann es vorgesehen sein, dass die zweite Beschichtung 10 bis 99 %, insbesondere 30 bis 99 %, vorzugsweise 60 bis 98 %, bevorzugt 80 bis 95 %, besonders bevorzugt 90 bis 95 %, der auftreffenden elektromagnetischen Strahlung, insbesondere Infrarotstrahlung, reflektiert.

Gleichermaßen ist es möglich, dass die zweite Beschichtung einen Reflektionsgrad ρ, welcher definiert ist als das Verhältnis zwischen reflektierter und einfallender Strahlungsintensität, von mindestens 0,1, insbesondere mindestens 0,3, vorzugsweise mindestens 0,6, bevorzugt mindestens 0,8, besonders bevorzugt mindestens 0,9, aufweist.

Gemäß einer bevorzugten Ausführungsform der vorliegenden Erfindung kann es darüber hinaus vorgesehen sein, dass die zweite Beschichtung einen Reflektionsgrad ρ von 0,1 bis 0,99, insbesondere 0,3 bis 0,99, vorzugsweise 0,6 bis 0,98, bevorzugt 0,8 bis 0,95, besonders bevorzugt 0,9 bis 0,95, aufweist.

Wie zuvor dargelegt, weist die erste, thermochrome Schicht üblicherweise eine Schalttemperatur auf, bei welcher sich die physikalischen, insbesondere die optischen, Eigenschaften der ersten Beschichtung ändern.

In diesem Zusammenhang kann es insbesondere vorgesehen sein, dass die erste Beschichtung oberhalb einer Schalttemperatur transparent und/oder durchlässig für elektromagnetische Strahlung, insbesondere Infrarotstrahlung, ist.

Gleichermaßen kann es vorgesehen sein, dass die erste Beschichtung oberhalb der Schalttemperatur einen Transmissionsgrad τ, definiert als Quotient der durch die Beschichtung hindurchtretenden Strahlungsintensität und der einfallenden Strahlungsintensität, für elektromagnetische Strahlung, insbesondere Infrarotstrahlung, von mindestens 0,6, insbesondere mindestens 0,7, vorzugsweise mindestens 0,8, bevorzugt mindestens 0,9, aufweist.

Darüber hinaus kann es vorgesehen sein, dass die erste Beschichtung oberhalb der Schalttemperatur einen Transmissionsgrad τ für elektromagnetische Strahlung, insbesondere Infrarotstrahlung, von 0,6 bis 0,99, insbesondere mindestens 0,7 bis 0,98, vorzugsweise 0,8 bis 0,97, bevorzugt 0,9 bis 0,95, aufweist.

Gemäß einer bevorzugten Ausführungsform der vorliegenden Erfindung weist die erste Beschichtung eine Schalttemperatur von höher als 10 °C, insbesondere höher als 15 °C, vorzugsweise höher als 20 °C, bevorzugt höher als 25 °C, auf.

Gleichermaßen kann es vorgesehen sein, dass die erste Beschichtung eine Schalttemperatur im Bereich von 10 bis 70 °C, insbesondere 15 bis 50 °C, vorzugsweise 20 bis 40 °C, bevorzugt 25 bis 30 °C, aufweist. Mit Schalttemperaturen in den zuvor genannten Bereichen lässt sich einerseits eine zu starke Absorption von Strahlung bei hohen Temperaturen und somit ein unnötiges Aufheizen des Substrates und andererseits eine unerwünschte Reflektion von elektromagnetischer Strahlung bei niedrigen Umgebungstemperaturen verhindern.

Im Allgemeinen ist die erste Beschichtung unterhalb der Schalttemperatur für elektromagnetische Strahlung, insbesondere Infrarotstrahlung, insbesondere zumindest im Wesentlichen undurchlässig.

Besonders bevorzugt wird es dabei im Rahmen der vorliegenden Erfindung, wenn die erste Beschichtung unterhalb der Schalttemperatur elektromagnetische Strahlung, insbesondere Infrarotstrahlung, absorbiert. Was den Absorptionsgrad α, definiert als Teil der Leistung der einfallenden Strahlung, welcher durch die Beschichtung absorbiert wird, anbelangt, so hat es sich bewährt, die erste Beschichtung unterhalb der Schalttemperatur einen Absorptionsgrad α für elektromagnetische Strahlung, insbesondere Infrarotstrahlung, von mindestens 0,2, insbesondere mindestens 0,3, vorzugsweise mindestens 0,5, bevorzugt mindestens 0,8, aufweist.

Gleichermaßen hat es sich bewährt, wenn die erste Beschichtung unterhalb der Schalttemperatur einen Absorptionsgrad α für elektromagnetische Strahlung, insbesondere Infrarotstrahlung, im Bereich von 0,1 bis 0,99, insbesondere 0,2 bis 0,95, vorzugsweise 0,5 bis 0,95, bevorzugt 0,8 bis 0,9, aufweist.

Die durch die erste, thermochrome Beschichtung absorbierte elektromagnetische Strahlungsenergie wird dann vorzugsweise in Form von Wärmeenergie auf die nachfolgenden Schichten des Beschichtungssystems und schließlich auf das Substrat übertragen.

Besonders gute Ergebnisse werden somit im Rahmen der vorliegenden Erfindung erhalten, wenn die erste, thermochrome Beschichtung unterhalb der Schalttemperatur elektromagnetische Strahlung, insbesondere Infrarotstrahlung, in thermische Energie umwandelt. In diesem Zusammenhang hat es sich weiterhin bewährt, wenn die thermische Energie auf die zweite, elektromagnetische Strahlung reflektierende Beschichtung und das Substrat übertragen wird. Durch die Absorption der elektromagnetischen Strahlung, insbesondere der IR-Strahlung, und deren Umwandlung in Wärmeenergie, wird das Substrat, insbesondere ein Dach oder ein Gebäude, erwärmt, so dass Heizkosten eingespart werden können.

Unterhalb der Schalttemperatur ist die erfindungsgemäß eingesetzte erste, thermochrome Beschichtung üblicherweise dunkel gefärbt, farbig oder trübe bzw. undurchsichtig.

Üblicherweise weist die erste, thermochrome Beschichtung ein thermochromes Material, insbesondere einen thermochromen Farbstoff, auf.

Geeignete thermochrome Farbstoffe können beispielsweise ausgewählt sein aus Leukofarbstoffen, ionischen Flüssigkeiten, Spirolaktonen, Fluoranen und deren Mischungen. Besonders bevorzugt wird es im Rahmen der vorliegenden Erfindung jedoch, wenn thermochrome Materialien auf Basis von ionischen Flüssigkeiten verwendet werden.

Besonders gute Ergebnisse werden in diesem Zusammenhang erhalten, wenn das thermochrome Material in Mikrokapseln vorliegt.

Die thermochrome Beschichtung besteht somit üblicherweise aus einem mikroverkapselten thermochromen Material sowie einem Bindemittel.

Was nun die Größe der Mikrokapseln anbelangt, welche das thermochrome Material enthalten, so kann diese naturgemäß in weiten Bereichen variieren. Es hat sich jedoch bewährt, dass, falls mikroverkapselte thermochrome Materialien verwendet werden, die Mikrokapseln einen Durchmesser im Bereich von 0,1 bis 50 µm, insbesondere 0,5 bis 30 µm, aufweisen. Mit Mikrokapseln mit Größen im genannten Bereich kann eine vollständige und dünne Beschichtung des Substrats gewährleistet werden.

Darüber hinaus wird es im Rahmen der vorliegenden Erfindung bevorzugt, wenn die erste Beschichtung die Mikrokapseln und/oder das thermochrome Material in Mengen von 10 bis 90 Gew.-%, insbesondere 20 bis 80 Gew.-%, vorzugsweise 30 bis 75 Gew.-%, bevorzugt 40 bis 70 Gew.-%, bezogen auf die erste Beschichtung, aufweist.

Was nun die zweite, elektromagnetische Strahlung reflektierende Beschichtung anbelangt, so sind dem Fachmann an sich geeignete Systeme bekannt. Es hat sich jedoch bewährt, wenn die zweite Beschichtung elektromagnetische Strahlung reflektierende Partikel, insbesondere IR-Strahlung reflektierende Partikel, sogenannte IR-reflektierende Partikel, aufweist. Alternativ oder ergänzend kann es jedoch auch vorgesehen sein, dass das Bindemittel der zweiten Beschichtung elektromagnetische Strahlung, insbesondere IR-Strahlung, reflektiert. Besonders bevorzugt ist es in diesem Zusammenhang, wenn die zweite Beschichtung elektromagnetische Strahlung reflektierende Partikel und ein elektromagnetische Strahlung reflektierendes Bindemittel aufweist.

Besonders gute Ergebnisse werden in diesem Zusammenhang erhalten, wenn die zweite Beschichtung elektromagnetische Strahlung reflektierende Partikel in Mengen von 10 bis 90 Gew.-%, insbesondere 20 bis 80 Gew.-%, vorzugsweise 30 bis 75 Gew.-%, bevorzugt 40 bis 70 Gew.-%, bezogen auf die zweite Beschichtung, aufweist.

Was nun die Farbe bzw. Färbung der zweiten, elektromagnetische Strahlung reflektierenden Beschichtung anbelangt, so kann es vorgesehen sein, dass diese farblos bzw. weiß ist. Durch eine farblose bzw. weiße elektromagnetische Strahlung reflektierende Beschichtung vollzieht sich an Gebäudefassaden und Dächern in Abhängigkeit von der Temperatur ein ungewöhnlicher und ansprechender Farbwechsel. Bei niedrigen Temperaturen ist das Beschichtungssystem durch die thermochrome Beschichtung vorzugsweise dunkel und/oder bunt gefärbt, wohingegen bei höheren Temperaturen die farblose bzw. weiße Färbung der elektromagnetische Strahlung reflektierenden Beschichtung oder die Färbung des beschichteten Substrates zum Vorschein kommt.

Alternativ kann es jedoch auch vorgesehen sein, dass die zweite, elektromagnetische Strahlung reflektierende Beschichtung dunkel, insbesondere rot oder braun, gefärbt ist. Es kann somit im Rahmen der vorliegenden Erfindung gleichfalls vorgesehen sein, dass die elektromagnetische Strahlung reflektierende Beschichtung Farbstoffe oder Farbpigmente aufweist, so dass bei einem auftretenden Farbwechsel der thermochromen Schicht die Färbung des Beschichtungssystems insgesamt nicht oder marginal geändert wird. Dieser gleichbleibende Farbeffekt ist insbesondere dann vorteilhaft, wenn ein Farbwechsel der Gebäudefassade bzw. der Dachkonstruktion nicht gewünscht ist. Insbesondere bei der Anwendung auf Dächern bzw. Dacheindeckungen, wie beispielsweise Dachziegel oder Dachsteinen, ist oftmals eine gleichbleibende Färbung des Daches bzw. der Dacheindeckung gewünscht.

Was die Schichtdicke der ersten und zweiten Beschichtung sowie des Beschichtungssystems anbelangt, so können diese in weiten Bereichen variieren. Besonders gute Ergebnisse werden im Rahmen der vorliegenden Erfindung allerdings erhalten, wenn die erste, thermochrome Beschichtung eine Schichtdicke von 0,01 bis 5 mm, insbesondere 0,05 bis 3 mm, vorzugsweise 0,1 bis 2 mm, bevorzugt 0,5 bis 1 mm, aufweist.

Gleichermaßen kann es im Rahmen der vorliegenden Erfindung vorgesehen sein, dass die zweite, elektromagnetische Strahlung reflektierende Beschichtung eine Schichtdicke von 0,01 bis 5 mm, insbesondere 0,05 bis 3 mm, vorzugsweise 0,1 bis 2 mm, bevorzugt 0,5 bis 1 mm, aufweist.

Was nun die Schichtdicke des erfindungsgemäßen Beschichtungssystems anbelangt, so kann diese in Abhängigkeit von den jeweiligen Anforderungen und den Schichtdicken der einzelnen Beschichtungen variieren. Es hat sich jedoch bewährt, wenn das Beschichtungssystem eine Schichtdicke von 0,02 bis 7 mm, insbesondere 0,1 bis 6 mm, vorzugsweise 0,2 bis 4 mm, bevorzugt 0,5 bis 2 mm, aufweist.

Wie zuvor bereits dargelegt, liegt das erfindungsgemäße Beschichtungssystem in Form von Schichten unterschiedlicher Beschichtungsstoffe, insbesondere in Form von Lackschichten bzw. Lackbeschichtungen oder Farbschichten, vor. Um das erfindungsgemäße Beschichtungssystem herzustellen, kann es daher vorteilhafterweise vorgesehen sein, dass die erste Beschichtung und/oder die zweite Beschichtung aus Beschichtungszusammensetzungen erhältlich sind. In diesem Zusammenhang wird es besonders bevorzugt, wenn die erste Beschichtung und/oder die zweite Beschichtung jeweils aus einer Beschichtungszusammensetzung erhältlich sind.

Besonders gute Ergebnisse werden im Rahmen der vorliegenden Erfindung erhalten, wenn die erste Beschichtung und die zweite Beschichtung aus jeweils einer Beschichtungszusammensetzung erhältlich sind.

Was die chemischen und physikalischen Eigenschaften der Beschichtungszusammensetzung anbelangt, so ist dem Fachmann an sich ein Vielzahl von möglichen Beschichtungszusammensetzungen geläufig. Es hat sich jedoch bewährt, wenn die Beschichtungszusammensetzung ein Beschichtungsstoff, insbesondere ein flüssiger Beschichtungsstoff, vorzugsweise ein Lack oder eine Farbe, bevorzugt ein Pulverlack, ein PUR-Lack, ein Melaminlack, ein Acrylatlack, eine Acrylatfarbe, ein Mischpolymerisatlack, eine Silkonfarbe, eine Silikatfarbe oder ein Dispersionslack, besonders bevorzugt ein Dispersionslack, ist.

Besonders gute Ergebnisse werden in diesem Zusammenhang erhalten, wenn die Beschichtungszusammensetzung eine dynamische Viskosität nach Brookfield bei 20 °C im Bereich von 100 bis 50.000 mPas, insbesondere 500 bis 30.000 mPas, vorzugsweise 1.000 bis 20.000 mPas, bevorzugt 2.000 bis 15.000 mPas, besonders bevorzugt 3.000 bis 10.000 mPas, ganz besonders bevorzugt 4.000 bis 8.000 mPas, aufweist.

Lacke bzw. Beschichtungszusammensetzungen mit den zuvor genannten Viskositäten sind einerseits niedrig viskos genug, um beispielsweise mittels Sprühauftrag auf ein Substrat aufgebracht zu werden, andererseits jedoch viskos genug, um ein Verlaufen vor Abschluss des Aushärteprozesses wirksam zu verhindern.

Was nun die Aufbringung der Beschichtungszusammensetzung auf das Substrat anbelangt, so kann hierfür jede geeignete Methode ausgewählt werden. Besonders gute Ergebnisse werden jedoch erhalten, wenn die Beschichtungszusammensetzung bzw. der Lack durch Streichen, Rollen, Walzen, Rakeln und/oder Sprühen auf das Substrat aufgebracht wird.

Gleichfalls hat es sich bewährt, wenn die Beschichtungszusammensetzung bzw. der Lack mit einer Schichtdicke im Bereich von 20 bis 600 µm, insbesondere 50 bis 500 µm, vorzugsweise 100 bis 400 µm, bevorzugt 150 bis 300 µm, auf das Substrat aufgebracht wird.

Im Rahmen der vorliegenden Erfindung kann es gleichfalls vorgesehen sein, dass die Beschichtungszusammensetzung in 1 bis 5, insbesondere 1 bis 3, Schichten, vorzugsweise in einer Schicht, auf das Substrat aufgebracht wird.

Im Rahmen der vorliegenden Erfindung ist es somit möglich, dass die erfindungsgemäßen Beschichtungssysteme jeweils aus mehreren Schichten unterschiedlicher Beschichtungsstoffe, insbesondere aus mehreren Lackschichten, bestehen.

Im Rahmen der vorliegenden Erfindung ist es üblicherweise vorgesehen, dass das Substrat eine Gebäudewand oder ein Dach, vorzugsweise ein Dach bzw. eine Dachkonstruktion, ist. In diesem Zusammenhang kann es weiterhin vorgesehen sein, dass das Substrat ein Steildach oder ein Flachdach, insbesondere ein Flachdach, ist. Das erfindungsgemäße Beschichtungssystem zeigt seine besondere Leistungsfähigkeit insbesondere nach Auftrag auf Flachdächer.

Im Rahmen der vorliegenden Erfindung kann es jedoch gleichermaßen vorgesehen sein, dass das Substrat eine metallische Oberfläche aufweist, und insbesondere ein Ingenieursbauwerk, d. h. ein sogenanntes technisches Bauwerk, wie beispielsweise eine Brücke oder ein Silo, oder ein Container ist.

Gemäß einer weiteren Ausführungsform der vorliegenden Erfindung ist es vorgesehen, dass das Substrat ein Fahrzeug ist, wie beispielsweise ein Eisenbahnwagon oder ein LKW. Das erfindungsgemäße Beschichtungssystem kann insbesondere auf Fahrzeuge zur Beförderung gekühlter Produkte aufgebracht werden.

Darüber hinaus kann es im Rahmen der vorliegenden Erfindung vorgesehen sein und ist bevorzugt, wenn das Substrat ein Material für die Dacheindeckung ist, wie beispielsweise ein Dachziegel oder ein Dachstein, insbesondere ein Betondachstein. Diese Substrate können direkt beim Hersteller mit dem erfindungsgemäßen Beschichtungssystem beschichtet und anschließend, verkaufsfertig verpackt in den Markt gebracht werden. Indem beispielsweise ein Dach mit erfindungsgemäß beschichteten Dachziegeln bzw. Dachsteinen eingedeckt wird, kann die nachträgliche Beschichtung von Steildächern vermieden werden.

Darüber hinaus kann es im Rahmen der vorliegenden Erfindung vorgesehen sein, dass zwischen der zweiten, elektromagnetische Strahlung reflektierenden Beschichtung und dem Substrat eine weitere Beschichtung, insbesondere eine Grundierungsschicht und/oder eine Haftvermittlungsschicht angeordnet ist. In diesem Zusammenhang werden besonders gute Ergebnisse erhalten, wenn die Grundierungsschicht bzw. Haftvermittlungsschicht auf dem Substrat aufgebracht ist und die zweite Beschichtung unmittelbar kontaktiert. Durch eine derartige Grundier- oder Haftvermittlerschicht kann die Haftung des erfindungsgemäßen Beschichtungssystems an dem Substrat und damit die Wärmeübertragung nochmals weiter verbessert werden.

Darüber hinaus ist im Rahmen der vorliegenden Erfindung gleichfalls möglich, dass auf der ersten, thermochromen Beschichtung eine weitere Beschichtung angeordnet ist, insbesondere auf diese aufgetragen ist. Hierbei kann es gemäß einer bevorzugten Ausführungsform der vorliegenden Erfindung vorgesehen sein, dass die weitere Beschichtung die zweite Beschichtung unmittelbar kontaktiert. Bei dieser weiteren Beschichtung handelt es sich üblicherweise um eine Schutzschicht, welche das Beschichtungssystem vor mechanischer Beschädigung und/oder vor UV-Strahlung schützt. Die weitere Beschichtung kann gegebenenfalls UV-Strahlung absorbieren, ehe die Strahlung auf das eigentliche erfindungsgemäße Beschichtungssystem trifft.

Durch die Verwendung einer weiteren Beschichtung auf der thermochromen Beschichtung kann somit die Lebensdauer des erfindungsgemäßen Beschichtungssystems verlängert werden. Es muss jedoch sichergestellt sein, dass die auf die erste, thermochrome Beschichtung aufgebrachte weitere Beschichtung keine Strahlung im Infrarotbereich absorbiert bzw. diese nur im untergeordneten Maße absorbiert.

Es zeigen die Figurendarstellung gemäß
- Fig. 1: ein zweischichtiges erfindungsgemäßes Beschichtungssystem auf einem Substrat,
- Fig. 2: einen vierschichtigen Aufbau des erfindungsgemäßen Beschichtungssystemes, welches auf ein Substrat aufgebracht ist,
- Fig. 3: ein erfindungsgemäßes Beschichtungssystem, welches auf ein Dach aufgebracht ist,
- Fig. 4: eine schematische Darstellung der Absorption und Reflektion von elektromagnetischer Strahlung durch das erfindungsgemäße Beschichtungssystem unterhalb der Schalttemperatur der thermochromen Beschichtung und
- Fig. 5: die Absorption und Reflektion von elektromagnetischer Strahlung durch das erfindungsgemäße Beschichtungssystem oberhalb der Schalttemperatur der thermochromen Beschichtung.

Weiterer Gegenstand der vorliegenden Erfindung - gemäß einem **zweiten** Aspekt der vorliegenden Erfindung ist Verwendung eines zuvor beschriebenen Beschichtungssystems zur Temperaturregulierung von Gebäuden.

Die Temperaturregulierung wird in diesem Zusammenhang insbesondere erhalten durch die Aufbringung des Beschichtungssystems auf eine Gebäudehülle, vorzugsweise auf ein Gebäudedach. Bei dem Gebäudedach handelt es sich insbesondere um ein Steildach oder ein Flachdach, wobei besonders gute Ergebnisse im Rahmen der vorliegenden Erfindung erhalten werden, wenn das Gebäudedach ein Flachdach ist.

Für weitergehende Einzelheiten zu diesem Erfindungsaspekt kann auf die obigen Ausführungen zum dem erfindungsgemäßen Beschichtungssystem verwiesen werden, welche in Bezug auf die erfindungsgemäße Verwendung entsprechend gelten.

Weiterer Gegenstand der vorliegenden Erfindung - gemäß einem **dritten** Aspekt der ist die Verwendung eines zuvor beschriebenen Beschichtungssystems zur Beschichtung von Dacheindeckungsmaterialien, insbesondere von Dachziegeln oder Dachsteinen.

Für weitergehende Einzelheiten zu diesem Erfindungsaspekt kann auf die obigen Ausführungen zu den übrigen Erfindungsaspekten verwiesen werden, welche in Bezug auf diese erfindungsgemäße Verwendung entsprechend gelten.

Darüber hinaus ist Gegenstand der vorliegenden Erfindung - einem **vierten** Aspekt der vorliegenden Erfindung die Verwendung eines zuvor beschriebenen Beschichtungssystems zur Temperaturregulierung von Ingenieursbauten, insbesondere Brücken oder Silos, Fahrzeugen, Containern und Behältnissen.

Bei den Behältnissen handelt es sich üblicherweise um Lagerbehältnisse aller Art, welche vorzugsweise temperaturempfindliche Waren und Güter aufnehmen sollen.

Für weitergehende Einzelheiten zu diesem Erfindungsaspekt kann auf die obigen Ausführungen zu den übrigen Erfindungsaspekten verwiesen werden, welche in Bezug auf diese erfindungsgemäße Verwendung entsprechend gelten.

Weiterer Gegenstand der vorliegenden Erfindung gemäß einem **fünften** Aspekt der vorliegenden Erfindung - ist ein Verfahren zur Beschichtung eines Substrates mit einem thermochoromen Beschichtungssystem, insbesondere wie zuvor beschrieben, wobei
(a) in einem ersten Verfahrensschritt eine erste Beschichtungszusammensetzung auf das Substrat aufgebracht und nachfolgend ausgehärtet und/oder vernetzt wird, so dass eine elektromagnetische Strahlung, insbesondere Infrarotstrahlung, reflektierende Beschichtung erhalten wird, und
(b) in einem auf den ersten Verfahrensschritt (a) folgenden zweiten Verfahrensschritt eine zweite Beschichtungszusammensetzung auf das Substrat und die erste Schicht aufgebracht und nachfolgend ausgehärtet und/oder vernetzt wird, so dass eine thermochrome Beschichtung erhalten wird.

In diesem Zusammenhang kann es weiterhin vorgesehen sein, dass vor Aufbringung der ersten Beschichtungszusammensetzung in Verfahrensschritt (a) das Substrat mit einem Haftvermittler oder einer Grundierung behandelt wird, um eine verbesserte Haftung der elektromagnetische Strahlung reflektierenden Beschichtung zu erhalten.

Weiterhin kann es vorgesehen sein, dass auf die in Verfahrensschritt (b) aufgebrachte thermochrome Beschichtung eine weitere Beschichtung in Form einer Beschichtungszusammensetzung aufgetragen und nachfolgend ausgehärtet und/oder vernetzt wird. Diese weitere Beschichtung schützt die thermochrome Beschichtung und die elektromagnetische Strahlung reflektierende Beschichtung vor mechanischer Beschädigung und/oder vor UV-Strahlung.

Für weitergehende Einzelheiten zu dem erfindungsgemäßen Verfahren kann auf die obigen Ausführungen zu dem erfindungsgemäßen Beschichtungssystem verwiesen werden, welche in Bezug auf das erfindungsgemäße Verfahren entsprechend gelten.

Wie zuvor bereits ausgeführt, ist die zweite Schicht des erfindungsgemäßen Beschichtungssystems vorzugsweise eine Infrarotstrahlung reflektierende Schicht und wird durch einen Beschichtungsstoff, insbesondere ein Lacksystem, gebildet.

Um eine Reflektion von Infrarotstrahlung zu ermöglichen, kann es vorgesehen sein, dass die zweite Schicht Infrarotstrahlung reflektierende Pigmente, wie beispielsweise Titandioxid oder Zinkoxid, aufweist. Durch die Verwendung der vorgenannten Pigmente ist insbesondere eine farblose, d. h. weiße Beschichtung zugänglich. Alternativ können jedoch auch farbige anorganische oder organische, vorzugsweise anorganische IR-reflektierende, Pigmente verwendet werden.

Darüber hinaus kann es im Rahmen der vorliegenden Erfindung gleichfalls vorgesehen sein, dass das Bindemittel bzw. der Filmbildner der elektromagnetische Strahlung reflektierenden Beschichtung derart ausgebildet ist, dass es elektromagnetische Strahlung, insbesondere Infrarotstrahlung, reflektiert.

Gemäß einer bevorzugten Ausführungsform der vorliegenden Erfindung ist das Bindemittel der elektromagnetische Strahlung, insbesondere Infrarotstrahlung, reflektierenden Beschichtung ein elastomeres Bindemittel. Vorzugsweise enthält die Beschichtungszusammensetzung zur Herstellung der elektromagnetische Strahlung reflektierenden Beschichtung bis zu 10 Gew.-%, insbesondere bis zu 20 Gew.-%, vorzugsweise bis zu 30 Gew.-%, eines Elastomers, wobei die Verwendung von Polyurethan-Elastomeren, Acrylaten und Polysiloxanen, insbesondere Acrylaten und Polysiloxanen, besonders bevorzugt ist.

Die Verwendung von Bindemittelsystemen, welche elastomere Anteile aufweisen oder vollkommen aus Elastomeren bestehen, hat den Vorteil, dass Längenänderungen des Substrates, beispielsweise in Folge von Temperaturschwankungen, problemlos ausgeglichen werden können, ohne dass die Beschichtung reißt. Gerade bei Anwendungen auf Hausdächern ist dieser Aspekt wichtig, da speziell im Sommer die Dächer im Verlauf eines Tages hohen Temperaturschwankungen ausgesetzt sind.

Vorzugsweise wird die elektromagnetische Strahlung reflektierende, insbesondere IR-Strahlung reflektierende, Beschichtung durch Auftragen einer flüssigen Beschichtungszusammensetzung auf ein Substrat, insbesondere eine Gebäudewand oder ein Dach bzw. auf Ingenieursbauten, Container oder Fahrzeuge, hergestellt.

Gemäß einer wiederum weiteren Ausführungsform der vorliegenden Erfindung liegt die Beschichtungszusammensetzung zur Herstellung der elektromagnetische Strahlung reflektierenden, insbesondere Infrarotstrahlung reflektierenden (IR-reflektierenden), Beschichtung des erfindungsgemäßen Beschichtungssystems in Form eines Klarlacks vor.

Bei der Verwendung eines Klarlacks kann entweder gezielt auf den bekannten "*white-roofing*"-Effekt abgestellt werden, bei welchem das Dach unter Hitzeeinstrahlung als farblos bzw. weiß erscheint, es ist jedoch auch möglich, auf das Substrat eine dunklere Grundierschicht aufzutragen, auf welche dann die elektromagnetische Strahlung, insbesondere IR-Strahlung, reflektierende, Beschichtung des erfindungsgemäßen Beschichtungssystems aufgebracht wird, so dass auch bei Überschreiten der Schalttemperatur der thermochromen Schicht das Dach dunkel gefärbt bleibt. Gleichfalls ist es auch möglich, der Klarlackzusammensetzung zur Herstellung der elektromagnetische Strahlung, insbesondere IR-Strahlung, reflektierenden Beschichtung, Farbpigmente beizumischen, um gewünschte Farbeffekte oder Färbungen zu erzeugen.

Die EP 2 966 131 A1 beschreibt eine IR-reflektierende Beschichtung sowie eine Beschichtungszusammensetzung, welche im Rahmen der vorliegenden Erfindung besonders vorteilhaft angewendet werden können.

Vorzugsweise enthält eine im Rahmen der vorliegenden Erfindung bevorzugt verwendete Beschichtungszusammensetzung zur Herstellung einer IR-reflektierenden zweiten Beschichtung des erfindungsgemäßen Beschichtungssystems
(a) ein oder mehrere elastomere Polymere mit einer gemessenen Glasübergangstemperatur (T_{g}) im Bereich von -100 bis 0 °C und
(b) 0,1 bis 25 Gew.-% mindestens eines mesoporösen Füllstoffes,
wobei die Beschichtungszusammensetzung eine Pigmentvolumenkonzentration (*Pigment Volume Concentration,* PVC) von 0,1 bis 25 % aufweist.

Wenn im Rahmen der vorliegenden Erfindung die Beschichtungszusammensetzung zur Herstellung einer IR-reflektierenden zweiten Beschichtung in Form eines Klarlacks vorliegt, so weist die Beschichtungszusammensetzung üblicherweise Pigmentvolumenkonzentration von 0,1 bis 15 %, insbesondere 0,5 bis 10 %, vorzugsweise 1 bis 5 %, auf.

Wenn die Beschichtungszusammensetzung zur Herstellung eines IR-reflektierenden Beschichtung in Form einer farbigen Beschichtungszusammensetzung vorliegt, so weist die Beschichtungszusammensetzung ein deutlich höheren Anteil an Pigmenten auf. In diesem Zusammenhang hat es sich bewährt, wenn die Beschichtungszusammensetzung zur Herstellung einer IR-reflektierenden zweiten Beschichtung eine Pigmentvolumenkonzentration von 15 bis 25 %, insbesondere 18 bis 25 Gew.-%, aufweist.

Unter einer Pigmentvolumenkonzentration (*Pigment Volume Concentration,* PVC) wird im Rahmen der vorliegenden Erfindung das Verhältnis der in der Zusammensetzung enthaltenen partikelförmigen Pigmente und Füllstoffe zum Gesamtvolumen der getrockneten Beschichtung in Prozent verstanden.

Unter der gemessenen Glasübergangstemperatur (T_{g}) wird im Rahmen der vorliegenden Erfindung die Glasübergangstemperatur eines Materials verstanden, welche durch Dynamische Differenzkalorimetrie (*Differential Scanning Calormetry,* DSC) im Bereich von -90 °C bis 100 °C bei einer Aufheizrate von 20 °C/min auf einem DSC Q2000 der Firma TA Instrument, New Castle, USA, bestimmt wird.

Im Rahmen der vorliegenden Erfindung werden besonders gute Ergebnisse erhalten, wenn das elastomere Material eine gemessene Glasübergangstemperatur (T_{g}) im Bereich von -80 bis -5° C aufweist.

Unter einem mesoporösen Füllstoff wird im Rahmen der vorliegenden Erfindung insbesondere ein poröses oxidisches Material verstanden, welches aus Siliziumdioxid, Aluminiumoxid, einem Alumosilikat oder deren Kombinationen aufgebaut ist, wobei der Füllstoff eine mittlere Porengröße von 2 bis 100 nm, vorzugsweise 2,5 bis 50 nm, berechnet aus der Stickstoffadsorption und nach der BET-Methode, basierend auf der Stickstoffadsorptions-/desorptionsisotherme, aufweist. Die im Rahmen der vorliegenden Erfindung verwendete Methode wird insbesondere beschrieben in "Recommendations for the Characterization of Porous Solids", J. Rouquerol et al.; Pure and Appl. Chem., Vol. 66, No. 8; pp. 173-1758; 1994.

Weiterhin werden im Rahmen der vorliegenden Erfindung besonders gute Ergebnisse erhalten, wenn das elastomere Polymer ausgewählt ist aus wässrigen Acrylemulsionscopolymeren, Polysiloxanen oder deren Mischungen und Kombinationen. Falls im Rahmen der vorliegenden Erfindung ein Acrylemulsionscopolymer verwendet wird, hat es sich bewährt, wenn sequentielle Acrylemulsionenscopolymere, d. h. Polymere mit mehreren Glasübergangstemperaturen (T_{g}), verwendet werden, insbesondere wobei die Acrylemulsionscopolymere einen harten Teil mit einer gemessenen Glasübergangstempereratur (T_{g}) im Bereich von 0 bis 70 °C und einen weichen Teil mit einer Gasübergangstemperatur (T_{g}) von -60 bis 0 °C, insbesondere -10 bis -40 °C, aufweist.

Geeignete Acrylemulsionscopolymere sind dem Fachmann an sich bekannt. Insbesondere enthalten geeignete Emulsionscopolymere die Copolymerisationsprodukte eines oder mehrerer weicher Vinyl- oder Acrylmonomere, wie beispielsweise Butylacrylat, Ethylhexylacrylat oder Laurylmethacrylat, mit 0,1 bis 5 Gew.-%, bezogen auf das Gesamtgewicht aller Monomere, mindestens eines polyadditionsfähigen Carbonsäuremonomers, wie beispielsweise Methylacrylsäure, und - falls nötig - mit einem härteren Vinyl- oder Acrylmonomer, wie beispielsweise Styrol, Acrylnitril und Methylmethacrylat, auf.

Um die Bewitterungseigenschaften der Beschichtung zu verbessern, kann das Copolymerisationsprodukt aus einer Monomermischung hergestellt werden, welche vorzugsweise weder Styrol noch vinylaromatische Monomere enthält. Insbesondere hat es sich bewährt, wenn Vinyl- oder Acrylatmonomere als weiche Monomere zur Herstellung der Zusammensetzung verwendet werden, wobei insbesondere Butylacrylat, Ethylacrylat, Methylacrylat, Ethylhexylacrylat, Octylmethacrylat, Isooctylmethacrylat, Decylmethacrylat, Isodecylmethacrylat, Laurymethacrylat, Pentadecylmethacrylat, Stearylmethacrylat, Octylacrylat, Isooctylacrylat, Decylacrylat, Isodecylacrylat, Laurylacrylat, C₁₂- bis C₁₈-Alkylmethacrylate, Cyclohexylacrylat und Cyclohexylmethacrylat, besonders bevorzugt sind.

Um die Stabilität der Polymeremulsionen in wässrigen System weiter zu verbessern, können die elastomeren Emulsionspolymere säurefunktionalisiert sein. Geeignete ethylenisch ungesättigte säurefunktionalisierten Monomere werden den weichen Monomeren beigemischt und beinhalten additionsfähige Carbonsäuren, deren Salze oder Anhydride, sowie Phosphor oder Schwefel aufweisende Säurefunktionen. Beispielsweise geeigneter Säuremonomere sind Maleinsäure oder Maleinsäureanhydrid, Phosphoalkyl(meth)acrylat, (Meth)acrylamidopropansulfonat, Methacrylsäure, Acrylsäure und Itaconsäure, vorzugsweise Methalcrylsäure, Acrylsäure und Itaconsäure.

Gemäß einer bevorzugten Ausführungsform der vorliegenden Erfindung beträgt der Gehalt an vinylaromatischen Monomeren weniger als 19,5 Gew.-%, insbesondere weniger als 10 Gew.-%, vorzugsweise weniger als 5 Gew.-%, bezogen auf die Gesamtmenge an Monomeren, da höhere Mengen an vinylaromatischen Monomeren zu Problemen der Wetterfestigkeit der ausgehärteten Beschichtung führen können.

Im Rahmen der vorliegenden Erfindung hat es sich darüber hinaus bewährt, wenn das Emulsionscopolymer ein Copolymerisationsprodukt eines (Meth)acrylnitrils in Mengen von weniger als 11 Gew.-%, insbesondere weniger als 8 Gew.-%, bezogen auf das Gesamtgewicht an Monomeren zur Herstellung des Emulsionscopolymers, enthält.

Darüber hinaus kann es im Rahmen der vorliegenden Erfindung weiterhin vorgesehen sein, dass die Mischung zur Herstellung des Emulsionscopolymers zur Herstellung der IR-Strahlung reflektierenden Beschichtung haftvermittelnde Monomere enthält, wie beispielsweise silanfunktionalisierte (Meth)acrylate, insbesondere (Meth)acryloyloxypropyltrialkoxysilane sowie Ureido(meth)acrylate. Falls die Mischung zur Herstellung des Emulsionscopolymers haftvermittelnde Monomere enthält, so enthält die Mischung die haftvermittelnden Monomere üblicherweise in Mengen von bis zu 5 Gew.-%, insbesondere 1 bis 4 Gew.-%, bezogen auf die Gesamtmenge an Monomeren zur Herstellung des Emulsionscopolymers.

Das elastomere Acrylemulsionscopolymer kann durch bekannte Emulsionspolymerisationstechniken hergestellt werden, beispielsweise durch wässrige Polymerisation in Gegenwart eines Initiators sowie eines oder mehrerer Dispergiermittel.

Insbesondere sind elastomere Acrylemulsionscopolymere auch aus hydrophoben Monomeren zugänglich. So beschreibt das US-Patent 5,521,266 ein Polymerisationsverfahren zur Herstellung von Emulsionscopolymeren aus einem oder mehreren hydrophoben Monomeren. Das hydrophobe Monomer kann dabei mit einer makromolekularen organischen Verbindung komplexiert werden, welche eine hydrophobe Kavität aufweist. Das komplexierte hydrophoben Monomer wird mit den weiteren Bestandteilen der Reaktionsmischung gemischt, nachdem das komplexierte hydrophobe Monomer elektrisch geladen wurde. Dabei kann es jedoch auch vorgesehen sein, dass die makromolekulare organische Verbindung in das Reaktionsgefäß gegeben wird, bevor, während oder nachdem die Mischung der Monomere elektrisch geladen wird. Geeignete makromolekulare organische Verbindungen sind beispielsweise ausgewählt aus Cyclodextrin und Cyclodextrinderivaten, Cyclooligosacchariden mit hydrophoben Kavitäten, wie beispielsweise Cycloinulohexose, Cycloinuloheptose und Cycloinulooctose, Calixarenen und Cavitands. Besonders gute Ergebnisse werden in diesem Zusammenhang erhalten, wenn das Verhältnis von weichem Acryl-Monomer zu makromolekularer organischer Verbindung im Bereich von 1 : 5 bis 5.000 : 1, vorzugsweise 1 : 1 bis 1.000 : 1, variiert wird.

Was nun das gewichtsmittlere Molekulargewicht M_{w} des elastomeren Emulsionscopolymers anbelangt, so kann dies naturgemäß in weiten Bereichen variieren. Besonders gute Ergebnisse werden im Rahmen der vorliegenden Erfindung jedoch erhalten, wenn das gewichtsmittlere Molekulargewicht M_{w} des elastomeren Emulsionscopolymers im Bereich von 10.000 bis 750.000, vorzugsweise 50 bis 500.000 g/mol liegt.

Die Herstellung von Emulsionscopolymeren ist dem Fachmann im Prinzip bekannt. Im Rahmen der vorliegenden Erfindung werden jedoch besonders gute Ergebnisse erhalten, wenn die Polymerisation in Gegenwart von Kettentransferreagenzien durchgeführt wird. Geeignete Kettentransferreagenzien sind beispielsweise Alkylmercaptane oder Halogenverbindungen. Vorzugsweise ist das Kettentransferreagenz hydrophob, wie beispielsweise n-Dodecylmercaptan oder C₄- bis C₁₈-Mercaptane. Kettentransferreagenzien werden üblicherweise in Mengen von 0,1 bis 2 Gew.-%, vorzugsweise 0,2 bis 1 Gew.-%, bevorzugt 0,25 bis 0,8 Gew.-%, bezogen auf die Gesamtmenge an Monomeren zur Herstellung des Emulsionscopolymers, verwendet.

Im Rahmen der vorliegenden Erfindung geeignete Emulsionscopolymere können darüber hinaus durch wässrige Emulsionsadditionspolymerisation in einer oder mehrerer Stufen hergestellt werden. Insbesondere können sequentielle Emulsionscopolymere zur Herstellung der IR-reflektierenden Beschichtung verwendet werden.

Zur Verringerung der Klebrigkeit der resultierenden Beschichtung kann das elastomere Emulsionspolymer beispielsweise ein zweitstufiges wässriges Acrylemulsionscopolymer mit einem harten Teil mit einer Glasübergangstemperatur (T_{g}) im Bereich vom 0 bis 70 °C und einem weichen Teil mit einer Glasübergangstemperatur (T_{g}) von -60 bis 0 °C, vorzugsweise -10 bis -40 °C, sein. Für mehrstufige, insbesondere zweistufige, wässrige Acrylemulsionscopolymere bewegt sich die gemessene Gesamtglasübergangstemperatur im Bereich von -100 bis 0 °C, wobei die Gesamtglasübergangstemperatur als gewichtetes Mittel der gemessenen Glasübergangstemperaturen für jeden Teil des Polymers bestimmt wird. So ist beispielsweise die Gesamtglasübergangstemperatur eines zweistufigen Polymers, welches 50 Gew.-% eines Teils mit einer gemessenen Glasübergangstemperatur von -80 °C und 50 Gew.-% eines Teils mit einer gemessenen Glasübergangstemperatur von 20 °C aufweist, -30 °C.

Wie zuvor bereits zuvor ausgeführt, können im Rahmen der vorliegenden Erfindung nicht nur acrylbasierte Emulsionscopolymere als Bindemittelsystem der IR-reflektierenden Beschichtung verwendet werden, sondern auch Siloxanpolymere. Siloxanpolymere, welches als elastomere Polymere zur Herstellung der IR-reflektierenden Beschichtung im Rahmen der vorliegenden Erfindung geeignet sind, sind insbesondere Polysiloxane, wie Polydimethylsiloxan, oder deren Copolymerisationsprodukte mit hydrolysierbaren silanfunktionellen Acrylmonomeren. Diese können beispielsweise in acrylatbasierte Copolymere einpolymerisiert werden, um Hybridpolymere zu erhalten.

Siloxanpolymere sind üblicherweise als lösemittelbasierte Zusammensetzungen in organischen Lösemitteln formuliert, wobei als Lösemittel beispielsweise Glykolalkylether verwendet werden. Hybridpolymere werden im Allgemeinen als Emulsionscopolymere unter Zuhilfenahme von Dispergiermitteln, wie beispielsweise nichtionischen Dispergiermitteln, formuliert. Ein geeignetes Siloxanpolymer, welches zur Herstellung der IR-reflektierenden zweiten Beschichtung verwendet werden kann, ist beispielsweise Geniosil^{®} WP-1 oder WP-2 der Wacker Chemie AG, München, Deutschland.

Im Rahmen der vorliegenden Erfindung werden, wie zuvor bereits ausgeführt, sehr gute Ergebnisse erhalten, wenn der mesoporöse Füllstoff ausgewählt aus Siliziumdioxid, Aluminiumoxiden und Alumosilikaten. Derartige mesoporöse Füllstoffe sind erhältlich durch Sol-Gelpolymerisationsverfahren, insbesondere durch eine Öl-in-Wasser-Emulsion. Hierbei wird ein strukturgebendes Reagenz, wie beispielsweise ein amphiphiles nicht-ionisches Blockcopolymer, in saurer wässriger Lösung bei pH-Werten von vorzugsweise weniger als 3, insbesondere weniger als 2, bevorzugt weniger als 1, aufgelöst und ein polymeres gelbildendes Mittel, wie beispielsweise Trielthylbenzol, zugegeben. Die Mischung wird anschließend erhitzt, wobei unter Rühren ein Oxidprecursor zugegeben und die Mischung für 12 bis 72 Stunden bei Temperaturen von 20 bis 80 °C, insbesondere 35 bis 60 °C, altern gelassen wird, um ein Gel herzustellen. Optional kann das Verfahren auch bei höherer Temperatur, beispielsweise im Bereich von 35 bis 140 °C, vorzugsweise 60 bis 100 °C, durchgeführt werden oder Porenbildner können für eine Dauer von 11 bis 36 Stunden der Reaktionsmischung zugegeben werden. Das Gel wird anschließend filtriert und der Rückstand in Wasser und Ethanol gewaschen sowie gegebenenfalls calciniert.

Die Herstellungsmethoden sind insbesondere detailliert im US-Patent 6,592,764 B1 sowie der US-Patentanmeldung 2009/0047329 erläutert.

Im Rahmen der vorliegenden Erfindung geeignete Oxidprecursoren, d. h. Vorläufer zur Herstellung der mesoporösen Partikel sind Metallalkoxide, wie beispielsweise Siliciumalkoxide, insbesondere Tetraethylorthosilikat, Tetramethylorthosilikat, sowie Aluminiumalkoxide, wie beispielsweise Aluminiumisopropoxid, Silikate oder Aluminate, wie beispielsweise Natriumsilikat, Ammoniumsilikat und Natriumaluminat, sowie Silicium- und Metallhalogene, insbesondere Siliciumtetrachlorid. Vorzugsweise sind im Rahmen der vorliegenden Erfindung die Oxidprecursoren anorganisch und umfassen Silikate und/oder Aluminate, wie beispielsweise Natriumaluminat.

Wenn der mesoporöse Füllstoff eine Kombination von Oxiden umfasst, so können die Verhältnisse der einzelnen Oxidprecursoren derart eingestellt werden, dass das gewünschte Verhältnis von Oxiden im Endprodukt erhalten wird.

Im Rahmen der vorliegenden Erfindung hat es sich im Allgemeinen bewährt, wenn die Menge an Oxidprecursoren im Bereich von 1 bis 25 Gew.-%, bezogen auf das Gesamtgewicht der Reaktionsmischung, variiert wird. Das gewichtsbezogene Verhältnis von Oxidprecursoren zu strukturgebenden Reagenzien liegt vorteilhafterweise im Bereich von 4 : 5 bis 20 : 1, vorzugsweise 1 : 1 bis 5 : 1.

Strukturgebende Reagenzien zur Herstellung des mesoporösen Füllstoffes in dem Sol-Gelverfahren sind beispielsweise Block-Copolymer, selbstorganisierende Polymere, Nanopartikel oder bioaktive Reagenzien, wobei die Auswahl der jeweiligen strukturgebenden Reagenzien in Abhängigkeit von der gewünschten Geometrie bzw. Form des Endproduktes vorgenommen wird. Gemäß einer bevorzugten Ausführungsform der vorliegenden Erfindung ist das strukturgebende Reagenz ein amphiphiles Polyoxyalkylen, ein amphiphiles Tensid oder selbstorganisierendes Blockcopolymer, wie beispielsweise Pluronics^{®} P123^{®} 9A Triblock PEO-PPO-PEO-Polymer mit einem Molekulargewicht von 5800 g/mol oder Fl27^{®} der BASF SE, Ludwigshafen, Deutschland.

Wenn im Rahmen der vorliegenden Erfindung ein strukturgebendes Reagenz eingesetzt wird, so beträgt die Menge an strukturgebendem Reagenz üblicherweise 0,5 bis 10 Gew.-%, bezogen auf das Gesamtgewicht an Reaktionsmischung zur Herstellung des mesoporösen Füllstoffs.

Darüber hinaus kann die Reaktionsmischung zur Herstellung des mesoporösen Füllstoffs weiterhin Säuren als Katalysatoren, insbesondere anorganische Säuren, wie beispielsweise Salzsäure oder Phosphorsäuren, enthalten. Es ist jedoch auch möglich, dass die Reaktionsmischung organische Säuren, wie Essigsäure oder Maleinsäure enthält.

Darüber hinaus kann im Rahmen der vorliegenden Erfindung zur Herstellung der mesoporösen Füllstoffe auch der Einsatz von Porenbildnern vorgesehen sein, wie zuvor dargelegt. Im Rahmen der vorliegenden Erfindung geeignete Porenbildner sind Fluoridsalze, insbesondere Natrium-, Kalium-, Ammonium- oder Tetraalkylammoniumfluorid. Wenn im Rahmen der vorliegenden Erfindung ein Porenbildner eingesetzt wird, so wird der Porenbildner überlicherweise in Mengen von 0,1 bis 2 Gew.-%, bezogen auf das Gesamtgewicht der Reaktionsmischung zur Herstellung des mesoporösen Füllstoffs, verwendet.

Die zuvor beschriebenen Verfahren zur Herstellung des mesoporösen Füllstoffs resultieren in mesoporösem Siliziumdioxid und/oder Aluminiumoxid, welche zumindest im Wesentlichen frei von organischen Gruppen oder Resten, wie beispielsweise Methyl- oder Alkylgruppen oder Kohlenwasserstoffen, sind.

Wenn organische Oxidprecursoren verwendet werden, wie beispielsweise Tetraethylorthosilikat, kann ein mesoporöser Füllstoff, welcher zumindest im Wesentlichen frei ist von anorganischen Gruppen oder Resten, erhalten werden, wenn der mesoporöse Füllstoff bei einem pH-Wert von ≤ 2 hergestellt wird.

Wie zuvor bereits dargestellt, besitzen die Beschichtungszusammensetzungen zur Herstellung der IR-reflektierenden Beschichtung nach der vorliegenden Erfindung, vorzugsweise sehr geringe Pigmentvolumenkonzentrationen, wodurch sichergestellt wird, dass die ausgehärteten Beschichtungen flexibel bleiben und elastomere Eigenschaften aufweisen. Der mesoporöse Füllstoff ist daher üblicherweise in der Beschichtungszusammensetzung zur Herstellung der IR-reflektierenden Beschichtung in Mengen von 0,5 bis 25 Gew.-%, insbesondere 1 bis 10 Gew.-%, bezogen auf den Gesamtfeststoffgehalt der Beschichtungszusammensetzung, enthalten.

Wie zuvor bereits dargelegt, sind die Beschichtungszusammensetzungen zur Herstellung der IR-reflektierenden Beschichtung vorzugsweise Klarlackbeschichtungen, wobei das elastomere Polymer sowie der mesoporöse Füllstoff vorzugsweise ähnliche Refraktionsindizes in Luft aufweisen. Vorzugsweise weichen die Refraktionsindizes des elastomeren Polymers sowie des mesoporösen Füllstoffs um weniger als 0,3, vorzugsweise weniger als 0,2, bevorzugt weniger als 0,15, voneinander ab.

Darüber hinaus kann es im Rahmen der vorliegenden Erfindung jedoch aus vorgesehen sein, dass der mesoporöse Füllstoff mit anderen IR-reflektierenden Pigmenten, insbesondere farbigen IR-reflektierenden Pigmenten, kombiniert wird, falls keine Klarlackanwendung vorgesehen ist. Auf diese Art und Weise können farbige Beschichtungen erhalten werden, welche IR-Reflektionsgrade von mehr als 25 %, insbesondere mehr als 40 %, aufweisen. Die IR-Reflektionsfähigkeit im Rahmen der vorliegenden Erfindung wird nach ASTM C1549 (2002) bestimmt. Geeignete IR-reflektierende Pigmente sind beispielsweise komplexe anorganische Pigmente, wie Chrom-Eisenpigmente. Geeignete IR-reflektierende farbige Pigmente sind beispielsweise Color^{®}, Eclipse^{®} oder Ferro Green 24-10204 von Ferro, Cleveland, USA.

Darüber hinaus kann es im Rahmen der vorliegenden Erfindung vorgesehen sein, dass die Beschichtungszusammensetzung zur Herstellung der zweiten, IR-reflektierenden Schicht mindestens ein Dispergiermittel enthält. Das Dispergiermittel kann dabei ausgewählt sein aus hydrophoben oder hydrophilen Dispergiermitteln, insbesondere hydrophilen Dispergiermitteln. Wenn die Beschichtungszusammensetzung ein hydrophiles Dispergiermittel enthält, so weist das hydrophile Dispergiermittel üblicherweise ein gewichtsmittleres Molekulargewicht M_{w} von 5.000 g/mol oder mehr, insbesondere 8.500 g/mol oder mehr, auf.

Besonders gute Ergebnisse werden im Rahmen der vorliegenden Erfindung erhalten, wenn das hydrophile Dispergiermittel ausgewählt ist aus copolymeren Dispergiermitteln, wie beispielsweise Tamol^{®} 851 (Natriumpoly(MMA)) oder 1224 (Poly(AAco-Hydroxypropylacrylat)) von Dow Chemical, Midland, USA; oder Rhodoline^{®} 286N von Rhodia, Cranberry, USA; Disponil^{®} FES-77, ein Fettalkoholglykolethersulfat erhältlich von Cognis, Cincinnati, USA; polybasische Salze polybasischer Säuren, wie beispielsweise Kaliumtripolyphosphat (KTPP); Salze von Polycarbonsäuren; Salze von säurefunktionalisierten Copolymeren; alkalilösliche Salze von Harzen; Phosphorethylmethacrylat (PEM); polymere oder copolymere Dispergiermittel; sowie Mono- oder Oligophosphor oder Schwefel enthaltende saure Salze, welche organisch oder anorganisch sein können.

Wenn die Beschichtungszusammensetzung zur Herstellung der IR-reflektierenden Beschichtung ein Dispergiermittel enthält, so enthält die Beschichtung das Dispergiermittel üblicherweise in Mengen von weniger als 2 Gew.-%, bezogen auf den Gesamtgehalt an Polymeren in der Beschichtungszusammensetzung.

Darüber hinaus kann es im Rahmen der vorliegenden Erfindung vorgesehen sein, dass die Beschichtungszusammensetzung zur Herstellung der IR-reflektierenden Beschichtung weitere Additive enthält, insbesondere ausgewählt aus der Gruppe von Verdickern, UV-Absorbern, Detergenzien, Benetzungsmitteln, Rheologiemodifikatoren, Trocknungsverzögerern, Weichmachern, Bioziden, Entschäumern, Farbstoffen, Wachsen sowie deren Mischungen. Insbesondere kann es im Rahmen der vorliegenden Erfindung vorgesehen sein, dass die Beschichtungszusammensetzung zur Herstellung der IR-reflektierenden Beschichtung Additive in Mengen von 0,01 bis 5 Gew.-%, insbesondere 0,1 bis 3 Gew.-%, insbesondere 0,5 bis 2 Gew.-%, bezogen auf die Beschichtungszusammensetzung, enthält.

Darüber hinaus kann es im Rahmen der vorliegenden Erfindung weiterhin vorgesehen sein, dass die Beschichtungszusammensetzung zur Herstellung der IR-reflektierenden Beschichtung Silane aufweist, insbesondere in Mengen von 0,2 bis 2 Gew.-%, vorzugsweise 0,5 bis 1 Gew.-%, bevorzugt 0,7 bis 1,5 Gew.-%, bezogen auf den Feststoffgehalt des Emulsioncopolymers. Durch die Verwendung von Silanen kann insbesondere die Haftung am Untergrund, d. h. auf dem Substrat oder auf einer Grundierungsschicht, verbessert werden.

Wenn die Beschichtungszusammensetzung zur Herstellung der IR-reflektierenden Beschichtung Silane enthält, so werden üblicherweise Silane mit einer oder mehrerer hydrolysierbaren Gruppen, insbesondere Silanen mit zwei oder drei hydrolysierbaren Gruppen, verwendet. Insbesondere sind die Silane ausgewählt aus Epoxysilanen, Aminosilanen, Vinylalkoxysilanen und deren Mischungen, vorzugsweise Aminosilanen. Besonders geeignete Aminosilane können Aminoalkyle als funktionale Gruppen enthalten und sind hydrolysierbar. Üblicherweise weisen die Aminosilane ein oder mehrere Alkoxygruppen oder aryl(alkyl)oxyfunktionelle Gruppen auf. Besonders bevorzugt weisen die Aminosilane zwei oder mehr Aminofunktionen auf sowie zwei, bevorzugt drei, hydrolysierbare Gruppen. Insbesondere sind besonders geeignete Aminosilane ausgewählt aus der Gruppe von Aminoethylaminopropyltrimethoxysilan, Glycidoxypropyltrimethoxysilan und Glycidoxypropylmethyldiethoxysilan.

Weiterhin kann es im Rahmen der vorliegenden Erfindung vorgesehen sein, dass die Beschichtungszusammensetzung zur Herstellung der IR-reflektierenden Schicht ein Feststoffanteil von 40 bis 80 Gew.-%, insbesondere 50 bis 70 Gew.-%, bezogen auf die Beschichtungszusammensetzung, aufweist.

Wiederum weiterer Gegenstand der vorliegenden Erfindung - gemäß einem **sechsten** Aspekt der vorliegenden Erfindung - ist ein Substrat, insbesondere eine Gebäudefassade oder ein Dach, welches mit einem zuvor beschriebenen Beschichtungssystem beschichtet ist.

Für weitergehende Einzelheiten zu diesem Erfindungsaspekt kann auf die obigen Ausführungen zu den übrigen Erfindungsaspekten verwiesen werden, welche in Bezug auf das erfindungsgemäße Substrat entsprechend gelten.

Der Gegenstand der vorliegenden Erfindung wird im Folgenden anhand der Figurenbeschreibung in nicht beschränkender Weise anhand bevorzugter Ausführungsformen der Erfindung beispielhaft erläutert.

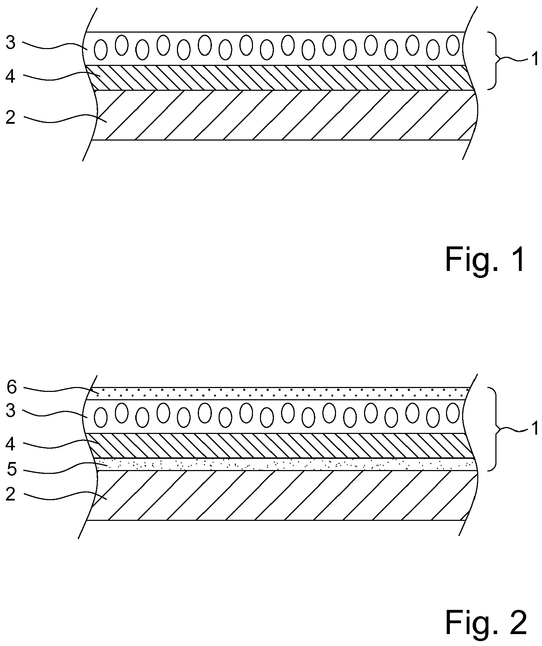

Es zeigt die Figurendarstellung gemäß Fig. 1 eine Ausführungsform des erfindungsgemäßen Beschichtungssystems 1, welche auf ein Substrat 2 aufgebracht ist. Bei dem in Fig. 1 dargestellten Beschichtungssystem 1 handelt es sich um einen zweischichtigen Aufbau, welcher aus einer thermochromen Beschichtung 3 und einer elektromagnetische Strahlung, insbesondere Infrarotstrahlung, reflektierenden Beschichtung 4 besteht.

Die thermochrome Beschichtung 3 enthält vorzugsweise mikroverkapselte thermochrome Farbstoffe, und absorbiert unterhalb einer vorgegebenen Schalttemperatur bzw. eines definierten Temperaturbereiches elektromagnetische Strahlung, insbesondere Infrarotstrahlung, und wandelt diese in Wärmeenergie um. Oberhalb der Schalttemperatur bzw. eines definierten Temperaturbereiches ist die thermochrome Beschichtung 3 hingegen durchlässig für elektromagnetische Strahlung, insbesondere Infrarotstrahlung, so dass die elektromagnetische Strahlung mit nahezu unveränderter Intensität auf die elektromagnetische Strahlung reflektierende Beschichtung 4 trifft.

Die elektromagnetische Strahlung reflektierende Beschichtung 4 ist vorzugsweise in Form eines Klarlacks ausgebildet, kann jedoch alternativ auch Farbpigmente enthalten, welche der Infrarotstrahlung reflektierenden Beschichtung eine gewünschte Farbe verleihen, so dass gezielt ein Farbwechsel zwischen den strahlungsabsorbierenden Zustand und dem strahlungsreflektierenden Zustand des thermochromen Beschichtungssystems erzeugt werden kann. Alternativ kann es jedoch auch vorgesehen sein, dass die Färbung der elektromagnetische Strahlung reflektierenden Schicht 4 derart eingestellt wird, dass kein Unterschied zwischen dem strahlungsabsorbierenden Zustand und dem strahlungsreflektierenden Zustand des Beschichtungssystems 1 zu beobachten ist.

Die Beschichtungen 3 und 4 werden vorzugsweise durch aufeinanderfolgenden Auftrag von flüssigen Beschichtungszusammensetzungen hergestellt, wobei die Beschichtungszusammensetzung zur Herstellung der elektromagnetische Strahlung reflektierenden Beschichtung 4 üblicherweise erst vernetzt bzw. ausgehärtet wird, bevor die Beschichtungszusammensetzung zur Herstellung der thermochromen Beschichtung 3 aufgetragen wird.

Fig. 2 zeigt einen alternativen Schichtaufbau des erfindungsgemäßen Beschichtungsssytems 1, welcher auf ein Substrat 2 aufgebracht ist. Zusätzlich zu der thermochromen Beschichtung 3 sowie der elektromagnetische Strahlung reflektierenden Beschichtung 4 weist diese Ausführungsform des erfindungsgemäßen Beschichtungssystems 1 eine Grundierungsschicht bzw. Haftvermittlerschicht 5 sowie eine weitere Beschichtung 6 auf.

Die Grundierungsschicht bzw. Haftvermittlerschicht 5 kann optional verwendet werden, um die Haftung des Beschichtungssystems 1 auf nur schwer benetzbaren Substraten 2 zu verbessern.

Die weitere Beschichtung 6 kann optional verwendet werden, um das Beschichtungssystem 1 widerstandsfähiger gegenüber mechanischer Belastung zu machen, insbesondere gegenüber mechanischer Beschädigung zu schützen, oder dessen Widerstandsfähigkeit gegenüber UV-Strahlung zu erhöhen. Es muss jedoch stets sichergestellt sein, dass die weitere Beschichtung 6 gegenüber elektromagnetischer Strahlung, insbesondere gegen Infrarotstrahlung, weitestgehend durchlässig ist.

Das erfindungsgemäße Beschichtungssystem 1 eignet sich in hervorragender Weise sowohl zur Aufbringung auf bereits bestehende Substrate, wie beispielsweise Gebäudefassaden oder Dächer, d. h. für den mobilen Einsatz, als auch zur Verwendung bei der Herstellung von Dachbauteilen, d. h. für stationäre Lösungen.

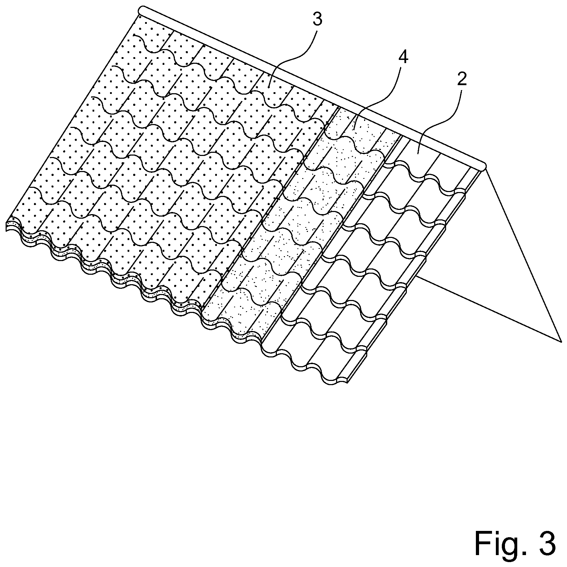

In Fig. 3 ist beispielhaft die Verwendung des erfindungsgemäßen Beschichtungssystems auf einem Substrat 2 in Form eines Daches wiedergegeben. Das erfindungsgemäße Beschichtungssystem ist dabei in Form der Infrarotstrahlung reflektierenden Beschichtung 4 sowie der thermochromen Beschichtung 3 auf das Substrat 2, nämlich das Dach, aufgebracht.

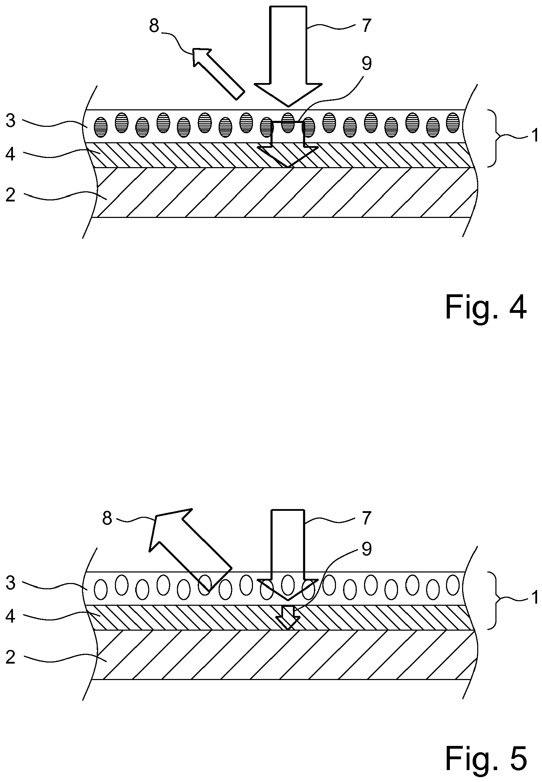

In den Fig. 4 und 5 ist beispielhaft die Wirkungsweise des erfindungsgemäßen Beschichtungssystems 1 anhand eines zweischichtigen Aufbaus, besteht aus einer thermochromen Beschichtung 3 sowie einer elektromagnetische Strahlung, insbesondere Infrarotstarhlung, reflektierenden Beschichtung 4, dargelegt.

In Fig. 4 ist die Funktionsweise des erfindungsgemäßen Beschichtungssystems 1 unterhalb der Schalttemperatur der thermochromen Beschichtung 3 dargestellt. Auf das Beschichtungssystem 1 auftreffende Strahlung 7, insbesondere IR-Strahlung, wird zu einem großen Teil von der thermochromen Schicht absorbiert und in Wärmeenergie 9 umgewandelt, welche an die elektromagnetische Strahlung reflektierende Beschichtung 4 sowie das darunterliegende Substrat 2 abgegeben wird. In diesem Zustand ist die thermochrome Beschichtung 3 üblicherweise dunkel oder trüb gefärbt. Lediglich ein geringer Teil der einfallenden elektromagnetischen Strahlung 7 wird an dem erfindungsgemäßen Beschichtungssystem 1 reflektiert, weshalb die Intensität der reflektierten Strahlung 8 deutlich geringer ist als die der einfallenden Strahlung 7.

In Fig. 5 ist die Funktionsweise des erfindungsgemäßen Beschichtungssystems 1 bei Temperaturen oberhalb der Schalttemperatur der thermochromen Beschichtung 3 angegeben. In diesem Zustand ist die thermochrome Beschichtung 3 üblicherweise transparent bzw. farblos und für elektromagnetische Strahlung, insbesondere Infrarotstrahlung, durchlässig. Lediglich ein geringer Teil der auf das Beschichtungssystem 1 auftreffenden Strahlung 7 wird in Wärmeenergie 9 umgewandelt, welche an die elektromagnetische Strahlung reflektierende Beschichtung 4 sowie das Substrat 2 abgegeben wird. Der weitaus größere Teil der einfallenden Strahlung 7 wird in Form der reflektierten Strahlung 8 an der Grenzfläche zwischen thermochromer Beschichtung 3 und elektromagnetische Strahlung reflektierender Beschichtung 4 reflektiert und wieder an die Atmosphäre abgegeben. In diesem Zustand wird somit einer weiteren Aufheizung des Substrats zwar effektiv entgegengewirkt.

### Bezugszeichenliste

- 1: Beschichtungssystem
- 2: Substrat
- 3: thermochrome Beschichtung
- 4: Elektromagnetische Strahlung reflektierende Beschichtung
- 5: Grundierungsschicht
- 6: weitere Beschichtung
- 7: einfallende Strahlung
- 8: reflektierte Strahlung
- 9: Wärmeenergie

## Patentansprüche

1. Thermochromes Beschichtungssystem (1) zur Aufbringung auf ein Substrat (2), insbesondere zur flexiblen Steuerung der Absorption elektromagnetischer Strahlung eines Substrates (2), aufweisend
(a) eine erste, thermochrome Beschichtung (3) und
(b) eine zweite, elektromagnetische Strahlung reflektierende Beschichtung (4),
wobei die erste Beschichtung (3) und die zweite Beschichtung (4) ausgehärtete Beschichtungsstoffe sind.

2. Beschichtungssystem nach Anspruch 1, **dadurch gekennzeichnet, dass** die zweite Beschichtung (4) zwischen der ersten Beschichtung (3) und dem Substrat (4) angeordnet ist.

3. Beschichtungssystem nach Anspruch 1 oder 2, **dadurch gekennzeichnet, dass** die zweite Beschichtung (4) Infrarotstrahlung reflektiert.

4. Beschichtungssystem nach einem der vorangehenden Ansprüche, **dadurch gekennzeichnet, dass** die erste Beschichtung (3) eine Schalttemperatur aufweist, bei welcher sich die physikalischen, insbesondere die optischen, Eigenschaften der ersten Beschichtung (3) ändern.

5. Beschichtungssystem nach einem der vorangehenden Ansprüche, **dadurch gekennzeichnet, dass** die erste Beschichtung (3) oberhalb einer Schalttemperatur transparent und/oder durchlässig für elektromagnetische Strahlung, insbesondere Infrarotstrahlung, ist.

6. Beschichtungssystem nach einem der Ansprüche 4 oder 5, **dadurch gekennzeichnet,**
**dass** die erste Beschichtung (3) eine Schalttemperatur höher als 10 °C, insbesondere höher als 15 °C, vorzugsweise höher als 20 °C, bevorzugt höher als 25 °C, aufweist und/oder
**dass** die erste Beschichtung (3) eine Schalttemperatur im Bereich von 10 bis 70 °C, insbesondere 15 bis 50 °C, vorzugsweise 20 bis 40 °C, bevorzugt 25 bis 30 °C, aufweist.

7. Beschichtungssystem nach einem der Ansprüche 4 bis 6, **dadurch gekennzeichnet, dass** die erste Schicht (3) unterhalb der Schalttemperatur für elektromagnetische Strahlung, insbesondere Infrarotstrahlung, insbesondere zumindest im Wesentlichen undurchlässig ist.

8. Beschichtungssystem nach einem der Ansprüche 4 bis 7, **dadurch gekennzeichnet, dass** die erste Schicht (3) unterhalb der Schalttemperatur elektromagnetische Strahlung, insbesondere Infrarotstrahlung, absorbiert.

9. Beschichtungssystem nach Anspruch 7 oder 8, **dadurch gekennzeichnet, dass** die erste Beschichtung (3) unterhalb der Schalttemperatur elektromagnetische Strahlung, insbesondere Infrarotstrahlung, in thermische Energie umwandelt, insbesondere wobei die thermische Energie auf die zweite Beschichtung (4) und das Substrat (2) übertragen wird.

10. Beschichtungssystem nach einem der vorangehenden Ansprüche, **dadurch gekennzeichnet, dass** die erste Beschichtung (3) ein thermochromes Material, insbesondere einen thermochromen Farbstoff, aufweist, insbesondere wobei das thermochrome Material in Mikrokapseln vorliegt.

11. Verwendung eines Beschichtungssystems nach einem der Ansprüche 1 bis 10 zur Temperaturregulierung von Gebäuden, insbesondere durch Aufbringung des Beschichtungssystems auf eine Gebäudehülle, vorzugsweise ein Gebäudedach, bevorzugt ein Steildach oder ein Flachdach, besonders bevorzugt ein Flachdach.

12. Verwendung eines Beschichtungssystems nach einem der Ansprüche 1 bis 10 zur Beschichtung von Dacheindeckungsmaterialien, insbesondere von Dachziegeln oder Dachsteinen.

13. Verwendung eines Beschichtungssystems nach einem der Ansprüche 1 bis 10 zur Temperaturregulierung von Ingenieursbauten, insbesondere Brücken oder Silos, Fahrzeugen, Containern und Behältnissen.

14. Verfahren zur Beschichtung eines Substrates mit einem thermochoromen Beschichtungssystem, insbesondere nach einem der Ansprüche 1 bis 10,
**dadurch gekennzeichnet,**
**dass**
(a) in einem ersten Verfahrensschritt eine erste Beschichtungszusammensetzung auf das Substrat aufgebracht und nachfolgend ausgehärtet und/oder vernetzt wird, so dass eine elektromagnetische Strahlung, insbesondere Infrarotstrahlung, reflektierende Beschichtung erhalten wird, und
(b) in einem auf den ersten Verfahrensschritt (a) folgenden zweiten Verfahrensschritt eine zweite Beschichtungszusammensetzung auf das Substrat und die erste Schicht aufgebracht und nachfolgend ausgehärtet und/oder vernetzt wird, so dass eine thermochrome Beschichtung erhalten wird.

15. Substrat, insbesondere Gebäudefassade oder Dach, beschichtet mit einem Beschichtungssystem nach einem der Ansprüche 1 bis 10.
